# EUROPEAN PATENT APPLICATION

(11) **EP 4 838 475 A1**
(43) Date of publication of application: **11.11.2026**
(21) Application number: 25741461.5
(22) Date of filing: 13.01.2025
(51) Int. Cl.: G06T 17/00

(54) **MULTI-MODAL THREE-DIMENSIONAL MODEL ESTABLISHMENT METHOD AND DEVICE, AND READABLE MEDIUM**

(30) Priority: 15.01.2024 CN 202410056821
(71) Applicant: ZTE CORPORATION, Shenzhen, Guangdong 518057 (CN)
(72) Inventor: WANG, Yijin, Shenzhen, Guangdong 518057 (CN)
(74) Representative: Canzler & Bergmeier Patentanwälte Partnerschaft mbB
(86) International application number: PCT/CN2025/072079
(87) International publication number: WO 2025/152900

(57) **Abstract**

The present disclosure provides a multi-modal three-dimensional model establishment method. The method comprises: acquiring IMU measurement data, a first image group collected by a binocular event camera, and a second image collected by a monocular RGB camera; calculating a second image group and a joint depth estimation image group on the basis of the IMU measurement data, the second image, and the first image group; and generating a three-dimensional model on the basis of the second image group, the joint depth estimation image group, an initial pose, and a target image. The present disclosure further provides a multi-modal three-dimensional model establishment device and a readable medium.

## Description

### CROSS REFERENCE TO RELATED APPLICATIONS

The present disclosure claims the priority to Chinese Patent Application No. 202410056821.0 entitled "MULTI-MODAL THREE-DIMENSIONAL MODEL ESTABLISHMENT METHOD AND DEVICE, AND READABLE MEDIUM" and filed on January 15, 2024, the contents of which are incorporated herein by reference in their entirety.

### TECHNICAL FIELD

The present disclosure relates to the field of computer technology, and in particular, to a multi-modal three-dimensional model establishment method and device, and a readable medium.

### BACKGROUND

With continuous development of computer vision technology and artificial intelligence technology and increasing demand of people for immersive visual experience, the three-dimensional reconstruction technology becomes increasingly important in the field of computer vision, and requirements on modeling precision and modeling efficiency of the three-dimensional reconstruction technology become higher. Some three-dimensional model establishment schemes have been proposed at present, but those three-dimensional model establishment schemes have the following problems.
1. Insufficient robustness under conditions of low illumination or low texture. Conventional reconstruction methods generally need to perform feature matching on an RGB image pair; however, an RGB camera has a fixed dynamic range, resulting in poor imaging performance in scenarios with low illumination, low texture, or high dynamic range. Therefore, accurate feature matching can be hardly achieved, and an accurate three-dimensional model cannot be provided accordingly.
2. Reconstruction is hard to accomplish in a high-speed motion state. Conventional visual reconstruction methods mainly depend on the RGB camera, which generally capture images at a fixed and relatively low frame rate. When the camera moves at a high speed, the captured RGB images inevitably suffer from motion blur, which makes it difficult to achieve accurate three-dimensional reconstruction.

### SUMMARY

The present disclosure provides a multi-modal three-dimensional model establishment method and device, and a readable medium.

An embodiment of the present disclosure provides a multi-modal three-dimensional model establishment method, including: acquiring Inertial Measurement Unit (IMU) measurement data, a first image group captured by a stereo event camera, and a second image captured by a monocular RGB camera; calculating a second image group and a joint depth estimation image group based on the IMU measurement data, the second image, and the first image group, wherein a motion blur correction process and a frame interpolation process are performed on the second image based on a smoothed first image group to obtain the second image group, a motion compensation process is performed on the first image group based on the IMU measurement data to obtain the smoothed first image group, and a moving object removal process is performed on the second image and the first image group to obtain the joint depth estimation image group; generating a three-dimensional model based on the second image group, the joint depth estimation image group, an initial pose, and a target image, wherein the initial pose is obtained by calculation based on the IMU measurement data.

An embodiment of the present disclosure further provides a multi-modal three-dimensional establishment device, including: one or more processors; a storage device having stored therein one or more programs which, when executed by the one or more processors, cause the one or more processors to implement the multi-modal three-dimensional model establishment method according to the embodiment of the present disclosure.

An embodiment of the present disclosure further provides a computer readable medium having a computer program stored therein, wherein the program when executed implements the multi-modal three-dimensional model establishment method according to the embodiment of the present disclosure.

### BRIEF DESCRIPTION OF DRAWINGS

FIG. 1 is a schematic flowchart illustrating a multi-modal three-dimensional model establishment method according to an embodiment of the present disclosure;
FIG. 2 is a schematic flowchart illustrating performing a motion compensation process on a first image group according to an embodiment of the present disclosure;
FIG. 3 is a schematic diagram of a first image group before and after motion compensation according to an embodiment of the present disclosure;
FIG. 4 is a schematic diagram illustrating performing frame interpolation on a second image using a first image group according to an embodiment of the present disclosure;
FIG. 5 is a schematic flowchart illustrating performing motion blur correction and frame interpolation process on a second image according to an embodiment of the present disclosure;
FIG. 6 is another schematic flowchart illustrating performing motion blur correction and frame interpolation process on a second image according to an embodiment of the present disclosure;
FIG. 7 is a schematic flowchart illustrating performing a frame interpolation process on a second image according to an embodiment of the present disclosure;
FIG. 8 is a schematic flowchart illustrating generating a second image group based on an expanded second image group according to an embodiment of the present disclosure;
FIG. 9 is a schematic flowchart illustrating determining a moving object mask according to an embodiment of the present disclosure;
FIG. 10 is a schematic flowchart illustrating calculating a joint depth estimation image group according to an embodiment of the present disclosure;
FIG. 11 is another schematic flowchart illustrating calculating a joint depth estimation image group according to an embodiment of the present disclosure;
FIG. 12 is a schematic diagram illustrating generating a three-dimensional model in an adversarial generation manner according to an embodiment of the present disclosure;
FIG. 13 is a schematic flowchart illustrating a multi-modal three-dimensional model establishment method according to an exemplary embodiment of the present disclosure;
FIG. 14 is a schematic structural diagram of a multi-modal three-dimensional model establishment device according to an embodiment of the present disclosure.

### DETAILED DESCRIPTION OF EMBODIMENTS

Exemplary embodiments will be described more fully below with reference to the drawings, but the exemplary embodiments may be embodied in different forms and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the terms "include" and/or "be made of" used herein indicate the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the related technology and the background of the present disclosure, and should not be interpreted in an idealized or overly formal sense unless expressly so defined herein.

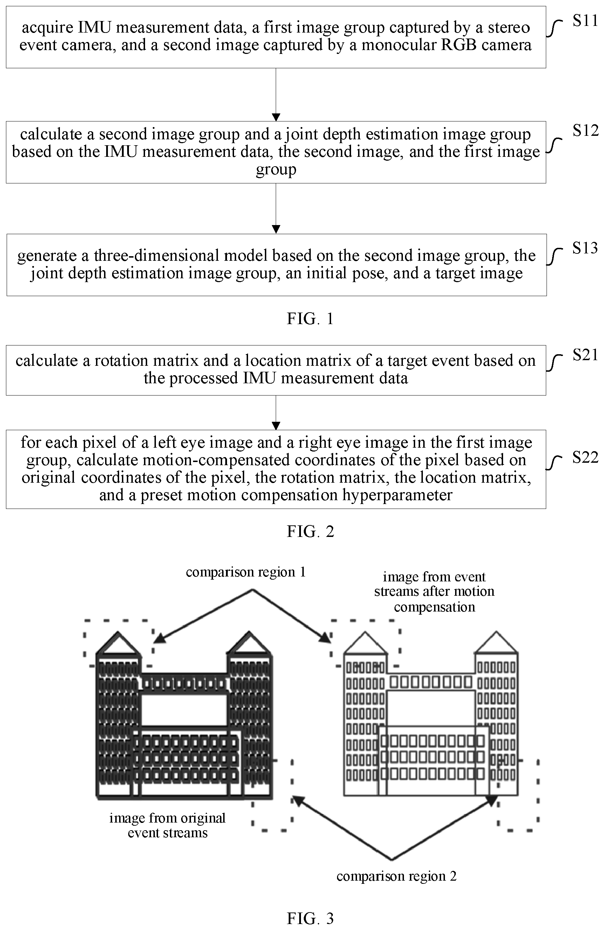

An embodiment of the present disclosure provides a multi-modal three-dimensional model establishment method. As shown in FIG. 1, the multi-modal three-dimensional model establishment method includes the following operations S11 to S13.

At operation S11, IMU measurement data, a first image group captured by a stereo event camera, and a second image captured by a monocular RGB camera are acquired.

A three-dimensional model establishment system according to the embodiments of the present disclosure includes three types of sensors: the monocular RGB camera, the stereo event camera, and the IMU, and those sensors provide input data of three different modalities for establishment of a three-dimensional model: an RGB image frame (i.e., the second image), stereo event streams (i.e., the first image group), and the IMU measurement data. The stereo event streams, i.e., the first image group, are captured by the stereo event camera, where the first image group includes an image *E*_{*k*-1-<*τ*} captured by a left-eye event camera and an image *E*_{*τ*-<*k*} captured by a right-eye event camera; acceleration and rotational motion of an object are detected by the IMU; and the RGB image, i.e., the second image *Iₖ,* is captured by the monocular RGB camera.

The IMU is a device integrating various inertial sensors for measuring acceleration and angular velocity of an object. The IMU is typically formed by a three-axis accelerometer and a three-axis gyroscope, and some advanced IMUs may further include a three-axis magnetometer.

An event camera, also called an event sensor or an event vision sensor, is a new type vision sensor with high speed and high sensitivity. Unlike the RGB camera, the event camera records variations in light intensity in an event-driven manner, rather than continuously capturing images at a fixed frame rate. The event camera simulates an operation mode of human eyes, and an event is generated merely when a variation in light intensity occurs in a scene, so that requirements on data transmission and processing are greatly reduced, and energy consumption overhead is relatively low. When the event camera senses that a variation in pixel light intensity exceeds a preset threshold, an event is generated, and a timestamp at which the event occurs, a pixel position, and polarity (increasing or decreasing) of the event are recorded. Compared with the traditional camera which captures an image at fixed time intervals, the event camera can capture the variations in light intensity with microsecond-level temporal resolution, so that the event camera has excellent performance in high-speed and high-dynamic-range scenarios.

At operation S12, a second image group and a joint depth estimation image group are calculated based on the IMU measurement data, the second image, and the first image group, where a motion blur correction process and a frame interpolation process are performed on the second image based on a smoothed first image group to obtain the second image group, a motion compensation process is performed on the first image group based on the IMU measurement data to obtain the smoothed first image group, and a moving object removal process is performed on the second image and the first image group to obtain the joint depth estimation image group.

Due to inevitable system noise, raw data provided by the sensors cannot be used directly for modeling, and need to be preprocessed. Therefore, after acquiring the IMU measurement data, the first image group, and the second image and before performing three-dimensional model establishment, the acquired multi-modal data needs to be preprocessed.

The first image group needs to be subjected to motion compensation using filtered IMU measurement data (i.e., an acceleration *α̃* and an angular velocity *ω̃* ), thereby generating the smoothed first image group (i.e., stereo event frames). The motion compensation technology is used to compensate for motion of the stereo event camera and generate stable stereo event streams, and also makes event information captured by the stereo event camera accurate. The motion compensation is a technique for correcting warped event streams by aligning events corresponding to a same scene edge, so as to improve accuracy of event-based visual odometry. In a motion compensation solution according to the embodiments of the present disclosure, rotation compensation and translation compensation are achieved using the IMU measurement data, so as to correct each original event position and improve accuracy of event-based visual odometry. In the motion compensation solution, the rotation compensation and the translation compensation are performed based on the angular velocity from the IMU and a linear velocity from a system backend respectively. By estimating velocity, the motion compensation solution works after initialization. The motion compensation solution is suitable for high-speed motion carriers such as autonomous driving vehicles and quadrotor aircraft, and can perform state estimation accurately and reliably.

Within a time interval between two consecutive second images captured by the RGB camera, motion compensation is performed on the first image group captured by the stereo event camera using particle filtered data from the IMU measurement data, and then optical flow images and depth images are derived from segments of the stereo event streams, thereby achieving motion blur removal and frame interpolation-based completion of the RGB images.

In a preprocessing stage, the moving object removal process is further respectively performed on the second image and the first image group, that is, a moving object mask is removed, depth estimation is performed on the first image group subjected to the motion blur removal, the frame interpolation-based completion, and the moving object mask removal, depth calculation is performed on the first image group subjected to the motion compensation, and the joint depth estimation image group *Dᵢ* is obtained based on a depth estimation result and a depth calculation result.

At operation S12, an initial pose *P*₀ may be further calculated based on the IMU measurement data. In some embodiments, a rotation matrix and a location matrix of a target event may be calculated based on the IMU measurement data, the target event is an event corresponding to the capture of the first image group, and the initial pose *P*₀ is calculated based on the rotation matrix and the location matrix of the target event.

By preprocessing the multi-modal data and performing interaction based on the multi-modal data, high-frame-rate and motion-deblurred RGB images which are needed by three-dimensional model establishment can be constructed, and the initial pose *P*₀ can be provided.

At operation S13, a three-dimensional model is generated based on the second image group, the joint depth estimation image group, an initial pose, and a target image, where the initial pose is obtained by calculation based on the IMU measurement data.

The target image is a rendered RGB image. Based on the input RGB image (i.e., the second image), a depth image (i.e., the joint depth estimation image group *Dᵢ* ), the initial pose *P₀*, and the target image, an estimated pose *Pᵢ* is obtained by multiple rounds of iterations of adversarial generation, so as to realize three-dimensional reconstruction of neural radiance field. Except that an exogenous pose (i.e., the initial pose) calculated based on the IMU measurement data needs to be input for a first round of training, all poses desired by subsequent rounds of iterative training are poses obtained by previous iterative training. In this way, a final pose is obtained after the multiple rounds of iterations and taken as a parameter of the three-dimensional model, so that the three-dimensional model of a target scene is obtained.

The multi-modal three-dimensional model establishment method provided in the embodiments of the present disclosure includes: acquiring IMU measurement data, a first image group captured by a stereo event camera, and a second image captured by a monocular RGB camera; calculating a second image group and a joint depth estimation image group based on the IMU measurement data, the second image, and the first image group, where a motion blur correction process and a frame interpolation process are performed on the second image based on a smoothed first image group to obtain the second image group, a motion compensation process is performed on the first image group based on the IMU measurement data to obtain the smoothed first image group, and a moving object removal process is performed on the second image and the first image group to obtain the joint depth estimation image group; generating a three-dimensional model based on the second image group, the joint depth estimation image group, an initial pose, and a target image, where the initial pose is obtained by calculation based on the IMU measurement data. According to the embodiments of the present disclosure, the monocular RGB frames, the stereo event streams, and the IMU measurement data are used as input data, and three-dimensional model reconstruction is performed using the multi-modal data, so that camera pose estimation and scene reconstruction can be performed under the conditions of low illumination and low texture, and high robustness and detailed model reconstruction can be achieved; by utilizing the high-frequency motion compensation characteristics of the IMU measurement data and the features of high frame rate and high dynamic range of the stereo event camera, the three-dimensional model reconstruction can be completed under motion conditions, modeling data acquisition efficiency is improved, and efficiency of three-dimensional model reconstruction for large-scale outdoor scenes is increased throughout the entire workflow.

In some embodiments, after acquiring the IMU measurement data (i.e., operation S11), the multi-modal three-dimensional model establishment method according to the embodiments of the present disclosure may further include: performing a noise reduction process and a smoothing process on the IMU measurement data to obtain the processed IMU measurement data. An influence of jitter variation of the IMU measurement data on modeling accuracy can be reduced by performing the noise reduction process and the smoothing process on the IMU measurement data.

A frequency of a conventional IMU may typically exceed 300 Hz, and the frequency of the IMU adopted in the embodiments of the present disclosure may be 1000 Hz. The IMU measurement data may generate relatively obvious high-frequency jitter under the action of noise, and the jitter variation of the IMU measurement data may affect accuracy of the three-dimensional model, so that the IMU measurement data needs to be subjected to noise reduction and smoothing by a filtering algorithm to obtain the filtered IMU measurement data, i.e., the filtered acceleration *α̃* and the filtered angular velocity *ω̃*.

According to the embodiments of the present disclosure, a particle filter may be adopted to preprocess the IMU measurement data. The particle filter is a filter suitable for a nonlinear and non-gaussian system, and approximates a probability density function of the system using a group of random sample points (particles), thereby achieving estimation and prediction of system state. The particle filter is very effective for smoothing of the IMU measurement data under the conditions of complex nonlinear system and non-gaussian noise.

It should be noted that the motion compensation process may be performed on the first image group based on the processed IMU measurement data to obtain the smoothed first image group, and the initial pose *P*₀ may be obtained by calculation based on the processed IMU measurement data.

In some embodiments, as shown in FIG. 2, performing the motion compensation process on the first image group based on the processed IMU measurement data to obtain the smoothed first image group may include the following operations S21 and S22.

At operation S21, a rotation matrix and a location matrix of a target event are calculated based on the processed IMU measurement data, where the target event is an event corresponding to capture of the first image group.

At operation S22, for each pixel of a left eye image and a right eye image in the first image group, motion-compensated coordinates of the pixel are calculated based on original coordinates of the pixel, the rotation matrix, the location matrix, and a preset motion compensation hyperparameter, where the motion-compensated coordinates of the pixel are used to generate the smoothed first image group.

Due to the high frequency of the IMU, there is an extremely short time interval Δt between a timestamp *tᵢ* and a timestamp *tₘ*, and a motion occurring within this time interval may be regarded as a uniform motion. Formula (1) defines a rotation matrix *comp_{Rm}* of a compensation event, and formula (2) defines a location matrix *comp_{Lm}* of the compensation event. ${comp}_{{R}_{m}} = exp \left(P\left({{ω}^{˜}}_{i}-{b}_{g}\left({t}_{i}\right)-{n}_{g}\left({t}_{i}\right)\right)Δt\right)$ (1) ${comp}_{{L}_{m}} = {comp}_{{R}_{m} {L}_{m}} + P \left({v}_{i}\right) Δ t$ (2) where *comp_{Rm}* denotes a rotation matrix *ω̃ᵢ*Δ*t* converted from an Euler angle, *ω̃ᵢ* denotes a measurement value of a gyroscope, *b_{g}*(*tᵢ*) and *n_{g}*(*tᵢ*) denote a bias and a noise variables of the gyroscope, respectively, *P* denotes a particle swarm optimization function, and an exponential map *exp* denotes mapping of an element from a mathematical space named se(3) to a space named SE(3), with se(3) being the Lie Algebra of SE(3), and SE(3) being a mathematical space representing a set of all possible rigid-body transformations in three-dimensional space. An isomorphic matrix *Lₘ* is expanded from a pixel position ${Coord}_{m}^{comp}$, and *vᵢ* denotes a velocity of a system side at the compensation timestamp *tᵢ*.

Finally, a compensated position is obtained by converting *comp_{Lm}* into a homogeneous matrix.

The motion-compensated coordinates of the pixel may be expressed by the following formula (3): ${Coord}_{m}^{comp} = M \left[{x}_{i}, {y}_{i}, {t}_{i}, θ\right]$ (3)

The target event is an i^{th} event, and may be expressed as *eᵢ* = {*lᵢ*,*tᵢ*,*pᵢ*}, where *lᵢ* = {*xᵢ*,*yᵢ*} denotes pixel coordinates of the target event *eᵢ*, *tᵢ* denotes a timestamp, and *pᵢ* denotes event polarity. An original event lasts from the timestamp *tᵢ* to the timestamp *tₘ*, the motion-compensated coordinates of the pixel are expressed as ${Coord}_{m}^{comp}$, *M* denotes a motion compensation function, and *θ* denotes a motion compensation hyperparameter.

FIG. 3 is a schematic diagram of a first image group before and after motion compensation according to an embodiment of the present disclosure. On the left side of FIG. 3 is an image from original event streams captured by the stereo event camera, i.e., an image from the original first image group; on the right side of FIG. 3 is an image from the event streams after motion compensation, i.e. an image from the smoothed first image group obtained by the motion compensation process. As can be seen from a comparison region 1 and a comparison region 2, the image from the original event streams has the problem of image blur caused by shooting in a motion state, but after the motion compensation process, motion blur is removed, and the image is clearer.

When an object is in a high-speed motion state, the stereo event camera may continuously capture stereo event stream images because relative motion continuously occurs. Compared with the stereo event stream images which continuously provide event information, the RGB images have a lower frame rate and is prone to motion blur due to the fixed low frame rate of the RGB camera.

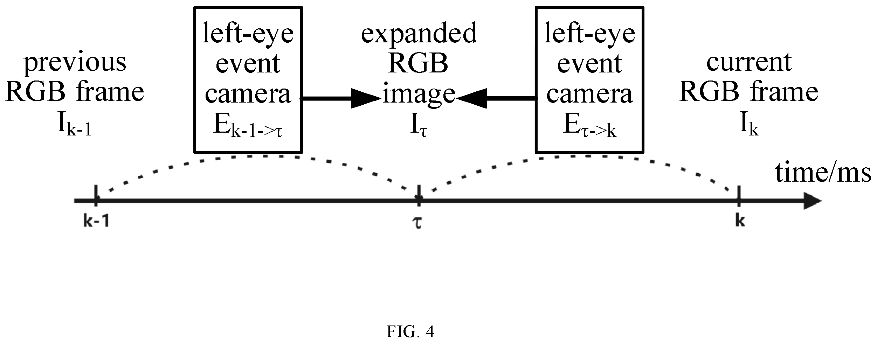

In order to solve the above problem, the embodiments of the present disclosure utilize the deep learning technology to perform motion blur correction and video frame interpolation on the RGB images based on the stereo event stream images. As shown in FIG. 4, the RGB camera may capture merely two RGB frames, i.e., a previous RGB frame *I*_{*k*-1} and a current RGB frame *Iₖ* at two discrete consecutive times, i.e., the time k-1 and the time k, while the stereo event stream images are output at any time τ in the time period [k-1, k]. Based on high frame rate and high dynamic range of the event camera, the RGB images may be motion deblurred based on the continuous event information provided by the stereo event stream images to obtain the high-quality RGB images, and frame interpolation is performed on the RGB images for expansion in the time period [k-1, k], that is, an expanded RGB image *Iᵣ* is generated and inserted based on the image *E*_{*k*-1->*τ*} captured by the left-eye event camera and the image *E_{τ->k}* captured by the right-eye event camera, thereby enriching context information of the RGB images.

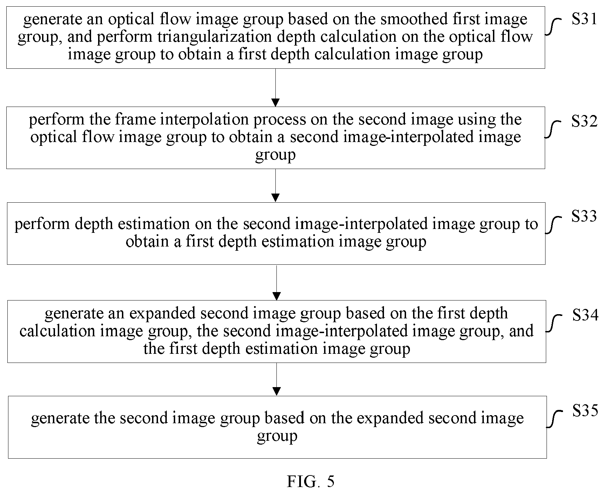

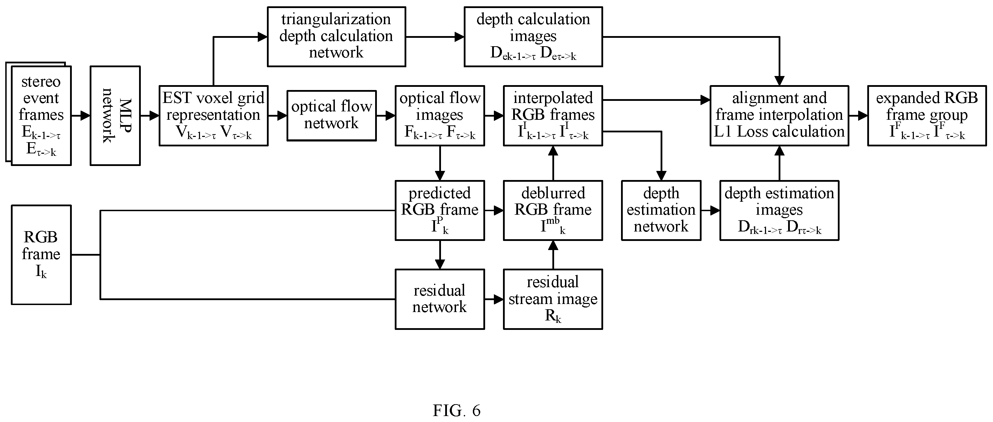

In some embodiments, as shown in FIG. 5 and FIG. 6, performing the motion blur correction process and the frame interpolation process on the second image based on the smoothed first image group to obtain the second image group includes the following operations S31 to S35.

At operation S31, an optical flow image group is generated based on the smoothed first image group, and triangularization depth calculation is performed on the optical flow image group to obtain a first depth calculation image group.

The smoothed first image group includes the image *E*_{*k*-1->*τ*} captured by the left-eye event camera and the image *E*_{*τ*->*k*} captured by the right-eye event camera which are obtained after the motion compensation process. The smoothed first image group (*E*_{*k*-1->*τ*} and *E*_{*τ*->*k*}) obtained after the motion compensation process is input to a Multi-Layer Perceptron (MLP) network, and is converted, by an MLP-based kernel function, into Event Spike Tensor (EST) voxel grid representation, thereby obtaining a voxel grid group (*V*_{*k*-1->*τ*} and *V*_{*τ*->*k*}). A voxel grid is a spatiotemporal histogram of the event, and each voxel represents a specific pixel and a specific time interval, so that temporal information of the event can be preserved well.

The voxel grid group (*V*_{*k*-1->*τ*} and *V*_{*τ*->*k*}) is input to an optical flow network for feature extraction to obtain the optical flow image group (*F*_{*k*-1->*τ*} and *F*_{*τ*->*k*}), and the triangularization depth calculation is performed on the voxel grid group (*V*_{*k*-1->*τ*} and *V*_{*τ*->*k*}) to obtain the first depth calculation image group (*D*_{*ek*-1*->τ*} and *D_{eτ->k}*).

At operation S32, the frame interpolation process is performed on the second image using the optical flow image group to obtain a second image-interpolated image group.

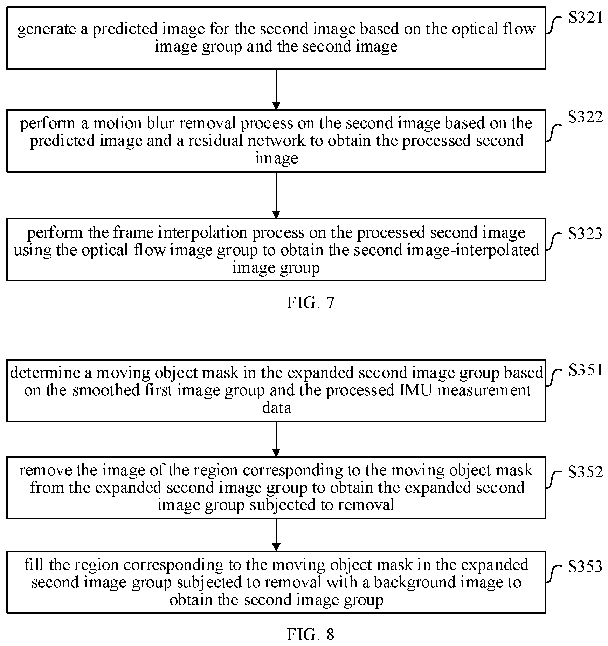

In some embodiments, as shown in FIG. 6 and FIG. 7, performing the frame interpolation process on the second image *Iₖ* using the optical flow image group (*F*_{*k*-1*->τ*} and *F*_{*τ*->*k*}) to obtain the second image-interpolated image group (*I^{I}*_{*k*-1*->τ*} and *I^{I}_{τ->k}*) (i.e., operation S32) includes the following operations S321 to S323.

At operation S321, a predicted image for the second image is generated based on the optical flow image group and the second image.

The optical flow image group (*F*_{*k*-1->*τ*} and *F*_{*τ*->*k*}) and the second image *Iₖ* captured by the RGB camera are combined to obtain a predicted RGB frame *I^{P}ₖ* of the time k, i.e., the predicted image for the second image.

At operation S322, a motion blur removal process is performed on the second image based on the predicted image and a residual network to obtain a processed second image.

The predicted image *I^{P}ₖ* and the second image *Iₖ* are input to the residual network for calculation to obtain a residual stream image *Rₖ*, and the motion blur removal process is performed on the residual stream image *Rₖ*, thereby motion deblurring the RGB image to obtain the processed second image ${I}_{k}^{mb}$.

At operation S323, the frame interpolation process is performed on the processed second image using the optical flow image group to obtain the second image-interpolated image group.

By utilizing the optical flow image group (*F*_{*k*-1->*τ*} and *F*_{*τ*->*k*}), frame interpolation is performed on the processed second image ${I}_{k}^{mb}$ for completion to obtain the second image-interpolated image group (*I^{I}*_{*k*-1*->τ*} and *I^{I}_{τ->k}*).

At operation S33, depth estimation is performed on the second image-interpolated image group to obtain a first depth estimation image group.

The second image-interpolated image group (*I^{I}*_{*k*-1*->τ*} and *I^{I}_{τ->k}*) is input to a depth estimation network for calculation to obtain the first depth estimation image group (D_{rk-1->τ} and D_{rτ->k}).

At operation S34, an expanded second image group is generated based on the first depth calculation image group, the second image-interpolated image group, and the first depth estimation image group.

Joint alignment is performed on the first depth calculation image group (*D*_{*ek*-1*->τ*} and *D_{eτ->k}*), the second image-interpolated image group (*I^{I}*_{*k*-1*->τ*} and *I^{I}_{τ->k}*), and the first depth estimation image group (Dr_{k-1->τ} and Dr_{τ->k}), and a loss is calculated by L1-Loss, thereby obtaining the expanded second image group (*I^{F}*_{*k*-1*->τ*} and *I^{F}_{τ->k}*). The expanded second image group is the expanded RGB image group with motion blur removed, and can enrich RGB information between the timestamp k-1 and the timestamp k.

At operation S35, the second image group is generated based on the expanded second image group.

A moving object removal process and a background completion process are performed on the expanded second image group (*I^{F}*_{*k*-1*->τ*} and *I^{F}_{τ->k}*) to obtain the second image group ${I}_{i}^{G}$.

In three-dimensional model reconstruction for outdoor buildings, street views, and large-scale scenes, moving objects generally exist in the scenes and makes scene model reconstruction inaccurate. The conventional methods can hardly overcome the inaccuracy, and need to consume a large amount of time and computing resources, resulting in poor final model reconstruction effect. The embodiments of the present disclosure can solve the above problem and improve three-dimensional model effect by performing the moving object removal process and the background completion process on the expanded second image group (*I^{F}*_{*k*-1*->τ*} and *I^{F}_{τ->k}*).

In some embodiments, as shown in FIG. 8, generating the second image group based on the expanded second image group (i.e., operation S35) includes the following operations S351 to S353.

At operation S351, a moving object mask in the expanded second image group is determined based on the smoothed first image group and the processed IMU measurement data.

An image of a region where the moving object mask M is located, i.e., an image of a moving object, is an image which needs to be removed from the expanded second image group (*I^{F}*_{*k*-1*->τ*} and *I^{F}_{τ->k}*). It should be noted that movable objects which remain stationary may constitute a unique scene such as a parking lot, an airport, or a port, so that the movable objects which remain stationary do not need to be removed.

At operation S352, an image of a region corresponding to the moving object mask is removed from the expanded second image group to obtain the expanded second image group subjected to removal.

At operation S353, the region corresponding to the moving object mask in the expanded second image group subjected to removal is filled with a background image to obtain the second image group.

After removing the image of the region corresponding to the moving object mask M from the expanded second image group (*I^{F}*_{*k*-1*->τ*} and *I^{F}_{τ->k}*), the region is filled with the background image. At operation S353, background completion can be achieved, and the second image group ${I}_{i}^{G}$ having the moving object removed and a background completed can be obtained.

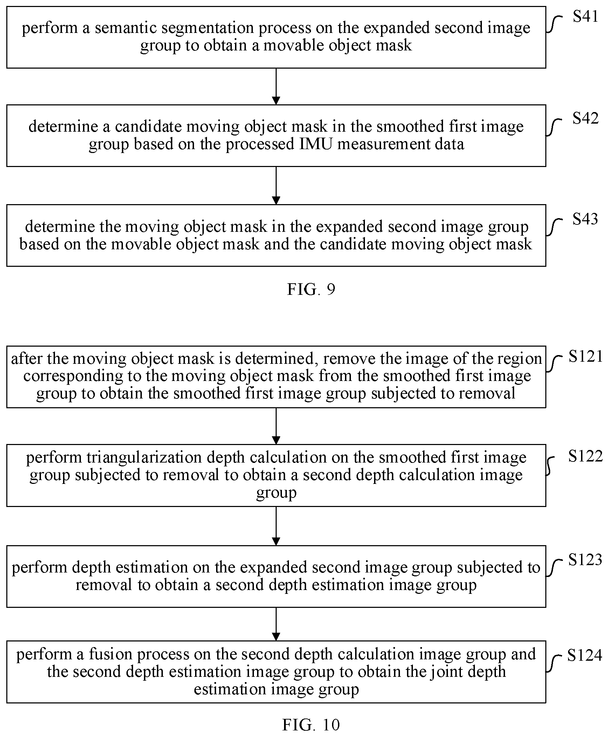

In some embodiments, as shown in FIG. 9, determining the moving object mask in the expanded second image group based on the smoothed first image group and the processed IMU measurement data (i.e., operation S351) includes the following operations S41 to S43.

At operation S41, a semantic segmentation process is performed on the expanded second image group to obtain a movable object mask.

A group of high-quality expanded RGB images (i.e., the expanded second image group) is obtained after subjecting the RGB image (i.e., the second image) to the motion blur correction process and the frame interpolation process. Semantic segmentation is performed on the expanded second image group (*I^{F}*_{*k*-1->*τ*} and *I^{F}_{τ->k}*) by a deep learning-based instance segmentation model to obtain the movable object mask *Mᵣ*. The deep learning-based instance segmentation model supports 16 types of movable objects as shown in Table 1:

**Table 1**

| Chinese name | English name | Classification ID |
|---|---|---|
| 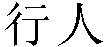 | Person | 1 |
| 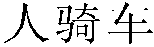 | Rider | 2 |
| 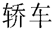 | Car | 3 |
| 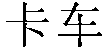 | Truck | 4 |
| 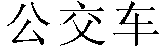 | Bus | 5 |
| 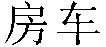 | Caravan | 6 |
| 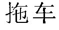 | Trailer | 7 |
| 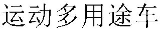 | SUV | 8 |
| 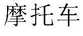 | Motorcycle | 9 |
| 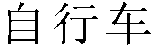 | Bicycle | 10 |
| 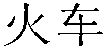 | Train | 11 |
| 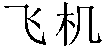 | Plane | 12 |
| 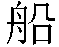 | Boat | 13 |
| 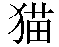 | Cat | 14 |
| 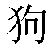 | Dog | 15 |
| 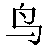 | Bird | 16 |

If the images in the expanded second image group (*I^{F}*_{*k*-1*->τ*} and *I^{F}_{τ->k}*) contain any of the 16 types of movable objects shown in Table 1, the movable object is segmented along a contour thereof to generate the movable object mask *Mᵣ*.

At operation S42, a candidate moving object mask in the smoothed first image group is determined based on the processed IMU measurement data.

In some embodiments, determining the candidate moving object mask in the smoothed first image group based on the processed IMU measurement data (i.e., operation S42) includes: determining, based on the processed IMU measurement data, a velocity *Vₛ* of a stationary object response event in the smoothed first image group and a velocity *V_{d}* of a moving object response event in the smoothed first image group, and determining the candidate moving object mask *Mₑ* in the smoothed first image group (*E*_{*k*-1->*τ*} and *E*_{*τ*->*k*}) based on the velocity *Vₛ* of the stationary object response event in the smoothed first image group and the velocity *V_{d}* of the moving object response event in the smoothed first image group.

When the stereo event camera is in motion, a stationary object in a captured image exhibits relative motion having a motion rate the same as that of the stereo event camera and a motion direction opposite to that of the stereo event camera. In this case, a moving object in the captured image is generally different from the stationary object in motion rate and motion direction. The stereo event camera can record events of light intensity variation in real time, and the IMU can provide pose information of the camera, including displacement and rotation.

The candidate moving object mask *Mₑ* in the smoothed first image group (*E*_{*k*-1->*τ*} and *E*_{*τ*->*k*}) may be determined based on a coincidence determination result of the velocity *Vₛ* of the stationary object response event in the smoothed first image group and the velocity *V_{d}* of the moving object response event in the smoothed first image group. The velocity *Vₛ* of the stationary object response event in the smoothed first image group is calculated by the following formula (4), and the velocity *V_{d}* of the moving object response event in the smoothed first image group is calculated by the following formula (5): ${V}_{s} = - {V}_{e} \pm ε$ (4) ${V}_{d} \neq \pm {V}_{e} \pm γ$ (5) where *Vₑ* denotes a velocity of the stereo event camera, and may be obtained by calculation based on the processed IMU measurement data; ε denotes a constant, and ε=0.1 in the embodiments of the present disclosure; γ denotes a constant, and γ=0.2 in the embodiments of the present disclosure.

At operation S43, the moving object mask in the expanded second image group is determined based on the movable object mask and the candidate moving object mask.

In some embodiments, determining the moving object mask in the expanded second image group based on the movable object mask and the candidate moving object mask (i.e., operation S43) includes: calculating an Intersection over Union (IoU) between the movable object mask *Mᵣ* and the candidate moving object mask *Mₑ*; in a case where the loU is greater than a preset threshold, determining the movable object mask *Mᵣ* as the moving object mask M in the expanded second image group.

In the embodiments of the present disclosure, when the loU between the candidate moving object mask *Mₑ* and the movable object mask *Mᵣ* is greater than 0.85, the movable object mask *Mᵣ* is taken as the moving object mask M which needs to be removed. The loU between the movable object mask *Mᵣ* and the candidate moving object mask *Mₑ* may be calculated by the following formula (6): $\begin{matrix}{IoU}_{mask} = occur \left({M}_{e}, {M}_{r}\right) / union \left({M}_{e}, {M}_{r}\right) \\ {IoU}_{mask} > 0.85\end{matrix}$ (6) where *occur(Mₑ,Mᵣ*) denotes an intersection of the movable object mask *Mᵣ* and the candidate moving object mask *Mₑ*, and *union*(*Mₑ*,*Mᵣ*) denotes a union of the movable object mask *Mᵣ* and the candidate moving object mask *Mₑ*.

With the increasing demand of people for immersive visual experience, the three-dimensional reconstruction technology becomes increasingly important in the field of computer vision. However, the conventional three-dimensional scene reconstruction methods cannot provide accurate reconstructed models under the conditions of low illumination or low texture. In addition, it is difficult to remove moving objects from scenes with the conventional methods, which poses a major challenge to high precision requirements of three-dimensional scene reconstruction such as three-dimensional model reconstruction for large-scale objects or bird's-eye view scenes including ancient buildings and urban traffic planning. In order to solve the above problem, according to the embodiments of the present disclosure, the moving object removal process is performed on the second image and the first image group in the preprocessing stage to obtain the joint depth estimation image group.

In some embodiments, as shown in FIG. 10, calculating the joint depth estimation image group based on the IMU measurement data, the second image, and the first image group (i.e., operation S12) includes the following operations S121 to S124.

At operation S121, after the moving object mask is determined, the image of the region corresponding to the moving object mask is removed from the smoothed first image group to obtain the smoothed first image group subjected to removal.

After the moving object mask M is determined, the image of the region corresponding to the moving object mask M is deleted from the expanded second image group (*I^{F}*_{*k*-1*->τ*} and *I^{F}_{τ->k}*) and the smoothed first image group (*E*_{*k*-1->*τ*} and *E*_{*τ*->*k*}) respectively.

At operation S122, triangularization depth calculation is performed on the smoothed first image group subjected to removal to obtain a second depth calculation image group.

After removing the mask M from the stereo event images, the second depth calculation image group ( ${D}_{{e}_{i}}^{M}$, *i* ∈ [k - 1, k] ) is obtained by triangulation calculation.

At operation S123, depth estimation is performed on the expanded second image group subjected to removal to obtain a second depth estimation image group.

The expanded second image group subjected to removal is obtained by removing the image of the region corresponding to the moving object mask from the expanded second image group. At operation S123, the expanded second image group subjected to removal is input to a depth estimation network for calculation to obtain the second depth estimation image group ( ${D}_{{r}_{i}}^{M}$, *i* ∈ [*k* - 1, *k*]).

At operation S124, a fusion process is performed on the second depth calculation image group and the second depth estimation image group to obtain the joint depth estimation image group.

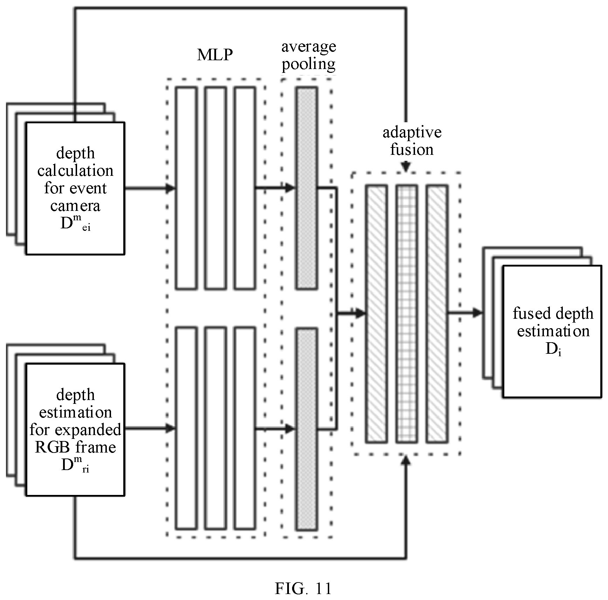

As shown in FIG. 11, the second depth calculation image group ( ${D}_{{e}_{i}}^{M}$, *i* ∈ [k - 1, k]) and the second depth estimation image group ( ${D}_{{r}_{i}}^{M}$, *i* ∈ [*k* - 1, *k*]) are respectively subjected to feature extraction by the MLP and to average pooling, and are then input to an adaptive fusion module with shared weights for feature fusion to obtain the joint depth estimation image group Dᵢ . The joint depth estimation image group *Dᵢ* may be calculated by the following formula (7): ${D}_{i} = \left(\begin{matrix}\left(α∗{D}_{{e}_{i}}^{M}+β∗{D}_{{r}_{i}}^{M}\right) ∗ {e}^{argmax \left({\sum }_{i = k - 1}^{k} \left.\left(\left‖{D}_{{e}_{i}}^{M}\right‖, \left‖{D}_{{r}_{i}}^{M}\right‖\right)\right)/k\right)} + ρ ∗ \left‖{D}_{{e}_{i}}^{M}\right‖ + \left(1-ρ\right) \\ ∗ {D}_{{r}_{i}}^{M}\end{matrix}\right)$ (7) where α, β, and ρ are hyperparameters which need to be learned by the adaptive fusion module.

In some embodiments, calculating the initial pose based on the IMU measurement data may include: calculating a rotation matrix *comp_{R}* and a location matrix *comp_{L}* of a target event based on the processed IMU measurement data, where the target event is an event corresponding to the capture of the first image group (*E_{k-1->τ}* and *E_{τ->k}*); calculating the initial pose *P*₀ based on the rotation matrix *comp_{R}* and the location matrix *comp_{L}* of the target event.

In some embodiments, generating the three-dimensional model based on the second image group, the joint depth estimation image group, the initial pose, and the target image (i.e., operation S13) includes: performing iterative computation in an adversarial generation manner based on the second image group ${I}_{i}^{G}$, the joint depth estimation image group *Dᵢ*, the initial pose *P*₀, and the target image to obtain an estimated pose *Pᵢ* meeting a convergence condition, where the estimated pose *Pᵢ* is a parameter of the three-dimensional model.

The estimated pose *Pᵢ* may be represented by a displacement parameter *Ti* and a rotation parameter *Qi. Ti* denotes a three-dimensional translation vector, and ${T}_{i} = \left({x}_{i}^{t}, {y}_{i}^{t}, {z}_{i}^{t}\right)$; *Qi* denotes a rotation vector in the form of a quaternion, and ${Q}_{i} = \left({ω}_{i}^{q}, {x}_{i}^{q}, {y}_{i}^{q}, {z}_{i}^{q}\right)$.

In some embodiments, performing iterative computation in the adversarial generation manner based on the second image group ${I}_{i}^{G}$, the joint depth estimation image group *Dᵢ*, the initial pose *P*₀, and the target image to obtain the estimated pose *Pᵢ* meeting the convergence condition includes: for one round of iterative computation, respectively calculating, based on the target image, a predicted second image group $I {′}_{i}^{G}$ of the current round, a predicted joint depth estimation image group *D'ᵢ* of the current round, and a predicted pose *P'ᵢ* of the current round; calculating a first adversarial residual $Δ {I}_{i}^{G}$ of the current round based on the second image group ${I}_{i}^{G}$ of the current round and the predicted second image group $I {′}_{i}^{G}$ of the current round, calculating a second adversarial residual Δ*Dᵢ* of the current round based on the joint depth estimation image group *Dᵢ* of the current round and the predicted joint depth estimation image group *D'ᵢ* of the current round, and calculating a third adversarial residual Δ*Pᵢ* of the current round based on the estimated pose *Pᵢ* of the current round and the predicted pose *P'ᵢ* of the current round, where the estimated pose of a first round is obtained by calculation based on the initial pose *P*₀; in a case where all the first adversarial residual $Δ {I}_{i}^{G}$, the second adversarial residual Δ*Dᵢ*, and the third adversarial residual Δ*Pᵢ* of the current round meet the convergence condition, determining the estimated pose of the current round as the parameter of the three-dimensional model.

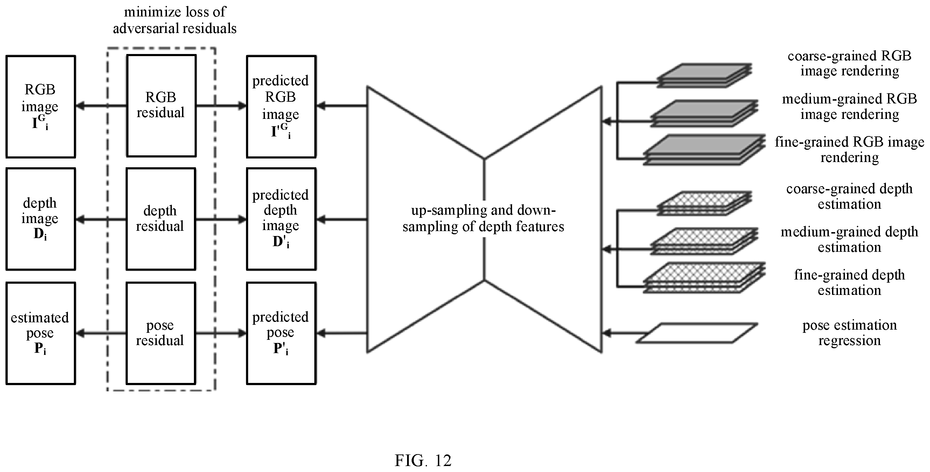

FIG. 12 is a schematic diagram illustrating generating a three-dimensional model in an adversarial generation manner according to an embodiment of the present disclosure. As shown in FIG. 12, the embodiments of the present disclosure perform iterative modeling of three-dimensional reconstruction using the input second image group ${I}_{i}^{G}$, joint depth estimation image group *Dᵢ*, and estimated pose *Pᵢ* based on neural radiance field and the idea of adversarial generation. In each round of three-dimensional model training, the input second image group ${I}_{i}^{G}$, joint depth estimation image group *Dᵢ*, and estimated pose *Pᵢ* are used as training data to update a three-dimensional reconstructed model once, and then the updated three-dimensional reconstructed model may perform reverse rendering and calculate the predicted second image group $I {′}_{i}^{G}$, the predicted joint depth estimation image group *D'ᵢ*, and the predicted pose *P'ᵢ* which correspond to a target scene in the current iteration. The first adversarial residual $Δ {I}_{i}^{G}$ is calculated based on the second image group ${I}_{i}^{G}$ and the predicted second image group $I {′}_{i}^{G}$, the second adversarial residual Δ*Dᵢ* is calculated based on the joint depth estimation image group *Dᵢ* and the predicted joint depth estimation image group *D'ᵢ*, and the third adversarial residual Δ*Pᵢ* is calculated based on the estimated pose *Pᵢ* and the predicted pose *P'ᵢ*. The three residuals are measured by L1-Loss. The three residuals are minimized in each round of training of the three-dimensional reconstructed model, thereby achieving updating the three-dimensional reconstructed model.

The embodiments of the present disclosure provide an adversarial generation-based three-dimensional model reconstruction process, in which the externally calculated initial pose *P*₀ merely needs to be input in the first round of iterative training, a corresponding estimated pose can be obtained in the subsequent iterative training by calculation based on the residuals between a predicted two-dimensional image projection of the three-dimensional model and a real input two-dimensional image in the adversarial generation manner, and the estimated pose is continuously improved in the iterative training.

In some embodiments, after calculating the third adversarial residual of the current round based on the estimated pose of the current round and the predicted pose of the current round, the multi-modal three-dimensional model establishment method according to the embodiments of the present disclosure may further include: in a case where the third adversarial residual is less than a first preset threshold and a next round of iterative computation is to be performed, calculating an estimated pose of the next round of iterative computation based on the estimated pose of the current round; in a case where the third adversarial residual is less than a second preset threshold, updating the IMU measurement data based on the estimated pose of the current round, where the second preset threshold is less than the first preset threshold.

In an i^{th} round of iterative computation, in a case where the third adversarial residual Δ*Pᵢ* is less than the first preset threshold σ₁ and a next round of iterative computation is to be performed, the estimated pose *Pᵢ* input in the current round of iterative computation is updated, pose prediction is performed based on the IMU measurement data to estimate an estimated pose *P*_{*i*+1} of the round of iterative computation, and taking the estimated pose *P*_{*i*+1} as an estimated pose to be input in an (i+1)^{th} round of iterative computation.

In a case where the third adversarial residual Δ*Pᵢ* is less than the second preset threshold σ₂, the current IMU measurement data is updated, that is, the IMU measurement data is reinitialized, thereby reducing a pose error caused by an accumulated error of the IMU measurement data. The second preset threshold σ₂ is less than the first preset threshold σ₁, and σ₁ =2.2 and σ₂ =1.2 in the embodiments of the present disclosure.

According to the embodiments of the present disclosure, three-dimensional model reconstruction is performed based on the neural radiance field, training and iteration are performed in the adversarial generation manner during training of an end-to-end deep learning model, and an intermediate result of the three-dimensional model obtained by training can be configured to correct the IMU, thereby reducing an influence of the accumulated error of the IMU.

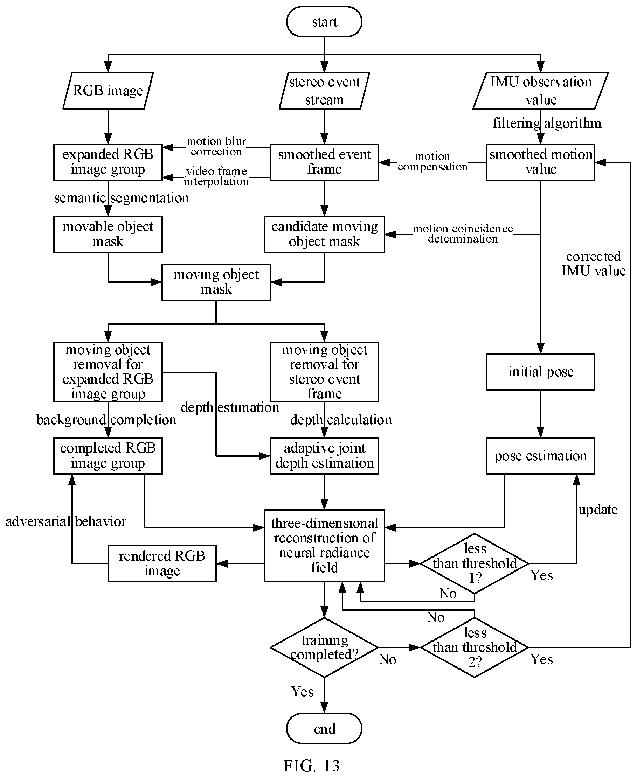

In order to illustrate the solutions provided in the embodiments of the present disclosure clearly, a specific example is described below with reference to FIG. 13. In the present example, the three-dimensional model is configured to train and construct simulated three-dimensional street view data, digital city landscape, and road traffic planning for autonomous driving system. Before the three-dimensional model reconstruction is started, a multi-modal sensor assembly formed by the monocular RGB camera, the stereo event camera, and the IMU need to be fixed at a top of a vehicle, and large-scale three-dimensional model reconstruction of urban traffic street scenes is performed by the vehicle running in a city. Lenses of the monocular RGB camera and the stereo event camera are oriented in a same direction towards the front of the vehicle, a forward driving direction of the vehicle is defined as a positive direction of z axis, and a coordinate system of the multi-modal sensor assembly accords with the left-hand rule. Before formally starting the three-dimensional model reconstruction for the urban scenes with the vehicle, a modeling area needs to be determined and a vehicle driving route needs to be planned, the driving route needs to form a closed loop in a clockwise or anticlockwise direction, that is, the vehicle needs to start from an origin and finally return to the origin, and the vehicle is forbidden from making a U-turn during driving.

Multi-modal data acquisition is performed and the three-dimensional model reconstruction is performed online from a starting point of the planned route. The multi-modal data acquisition is performed at all time, the acquired multi-modal data includes: RGB images, stereo event streams, and IMU observation values, and the multi-modal data acquired at each timestamp is stored; the online three-dimensional model reconstruction is performed every 2 seconds.

As shown in FIG. 13, the multi-modal three-dimensional model establishment process includes the following operations.

### Operation 1: multi-modal data preprocessing

(1) noise reduction and filtering are performed on the IMU observation values by a particle swarm optimization algorithm to obtain the smoothed IMU observation values.
(2) Since the vehicle is in a driving state for most of the time, the stereo event camera outputs a continuous stereo event stream, and motion compensation may be performed on the output of the stereo event camera by utilizing motion characteristics of the high-frequency IMU, so as to further stabilize and smooth the stereo event stream.
(3) The stereo event stream is processed by a depth learning algorithm to finally output high-frame-rate optical flow images, and motion blur correction and high-frame-rate RGB video frame interpolation are performed on the low-frame-rate RGB images based on the smoothed stereo event stream and the optical flow images, thereby obtaining an expanded RGB image group.

### Operation 2: moving object removal and background completion

The moving object is one of the 16 types of movable objects defined in the above Table 1 and is in motion. On the one hand, the candidate moving object mask *Mₑ* is determined based on the IMU observation values and the smoothed stereo event stream; on the other hand, instance segmentation is performed on the 16 types of movable objects in the RGB images to obtain the movable object mask *Mᵣ*. IoU calculation is performed on the candidate moving object mask *Mₑ* and the movable object mask *Mᵣ* to obtain the moving object mask M which meets motion state requirements and is one of the 16 types of movable objects.

The object corresponding to the moving object mask M is segmented, and a background corresponding to the moving object mask M is generated using a deep learning generation network, thereby realizing removal of the movable object and background completion of the corresponding region. Finally, the RGB image group ${I}_{i}^{G}$ having the moving object removed and the background completed and the stereo event stream having the moving object removed are obtained.

### Operation 3: depth estimation and pose estimation

The second depth calculation image group ${D}_{{e}_{i}}^{M}$ may be obtained by calculation based on the stereo event stream having the moving object removed, and the second depth estimation image group ${D}_{{r}_{i}}^{M}$ may be obtained by a depth learning depth estimation algorithm based on the RGB image group having the moving object removed and the background completed. The joint depth estimation image group *Dᵢ* is obtained by calculation by an adaptive joint depth estimation algorithm based on ${D}_{{e}_{i}}^{M}$ and ${D}_{{r}_{i}}^{M}$.

Based on the IMU observation values processed by the particle swarm optimization algorithm, motion compensation can be performed on the other sensors by utilizing the motion characteristics of the IMU, the initial pose *P*₀ can be further calculated, and the initial pose is used for the next operation of adversarial generation-based model training of neural radiance field.

### Operation 4: adversarial generation-based model training of neural radiance field

Three-dimensional reconstruction training of the neural radiance field may be performed based on the RGB image group ${I}_{i}^{G}$ having the moving object removed and the background completed, the rendered RGB images, and the joint depth estimation image group *Dᵢ* which are obtained through the previous operations and the initial pose *P*₀ obtained by calculation based on the IMU observation data. The initial pose *P*₀ obtained by calculation based on the IMU observation data is used for a first training iteration; in subsequent training iterations, a previous training iteration provides the estimated pose *Pᵢ* for a following training iteration. The adversarial generation-based model training of neural radiance field provided herein can generate the three-dimensional model and the estimated pose, and perform the three-dimensional model reconstruction based on the estimated pose; meanwhile, the pose can be calculated based on projection of the three-dimensional model, thereby performing pairwise adversarial optimization to achieve the purpose of optimizing the pose and the three-dimensional model at the same time.

The online three-dimensional scene modeling can be achieved through the above operations; meanwhile, the multi-modal data can be stored for subsequent fine processing. After the online three-dimensional model is completed, that is, conversion of the multi-modal street view data to the three-dimensional model is completed, the reconstructed three-dimensional model may be rendered into a video, may be subjected to secondary three-dimensional design, and may also be viewed on a screen through a three-dimensional viewer for interaction and browsing by users.

The embodiments of the present disclosure utilize the multi-modal data to perform the three-dimensional model reconstruction, and have the advantages of high robustness and detailed reconstruction. In the conventional three-dimensional model reconstruction and rendering, high-end equipment and complex software are needed, and specialized three-dimensional modeling designers and significant time cost are often desired. According to the embodiments of the present disclosure, the monocular RGB images, the stereo event streams, and the IMU measurement values are input as data, and the high-frequency motion compensation characteristics of the IMU and the features of high frame rate and high dynamic range of the stereo event camera are fully utilized, so that the three-dimensional model reconstruction can be achieved in motion scenarios, the modeling data acquisition efficiency is improved, and the efficiency of three-dimensional model reconstruction for large-scale outdoor scenes is increased throughout the entire workflow.

The embodiments of the present disclosure adopt an end-to-end deep learning algorithm for image processing, and can improve accuracy and efficiency of the three-dimensional model reconstruction. By adopting the end-to-end deep learning algorithm, except for two I/O operations for input/output, all computation can be performed on a Graphics Processing Unit (GPU) in the whole process, and RGB image deblurring, high-frame-rate RGB image, moving object removal and background completion of images, and adversarial generation-based three-dimensional model reconstruction of neural radiance field are achieved. Compared with conventional computer vision algorithms, three-dimensional reconstruction for large-scale outdoor scenes can be realized in a case where a multi-modal data acquisition device is in high-speed motion; compared with conventional deep learning pipeline processing flow, I/O operations are greatly reduced, and efficiency of three-dimensional reconstruction is improved.

The embodiments of the present disclosure employ an adversarial generation-based neural radiance field model, multi-sensor pose information obtained by external computation merely needs to be input in the first round of training, and in the subsequent multiple rounds of iterative training, pose estimation and three-dimensional scene reconstruction can be realized in the adversarial generation manner, so that a pose computation process is avoided, and the efficiency of three-dimensional model reconstruction is further improved. Without relying on external pose computation, the multi-modal three-dimensional model establishment solution provided in the embodiments of the present disclosure can realize online reconstruction, that is, performing data acquisition and three-dimensional model reconstruction at the same time.

The embodiments of the present disclosure are applicable to the three-dimensional model reconstruction for large-scale outdoor scenes and urban scenes, and can be fixedly loaded on high-speed motion carriers such as vehicles and unmanned planes. By utilizing the multi-modal data, high-frame-rate and motion-deblurred RGB images are obtained, and the moving objects in the scenes are removed from the RGB images. The adversarial generation-based neural radiance field training can be performed by utilizing merely one initial pose and the processed RGB images; in each round of iterative training, not only can the three-dimensional model be generated, but also the pose information needed by the next round of iterative training can be output, thereby achieving online training of the three-dimensional model and finally achieving generation of the three-dimensional model.

According to the embodiments of the present disclosure, the monocular RGB camera, the stereo event camera, and the IMU are utilized, high-precision three-dimensional model reconstruction of the target scene can be realized in a motion state, camera pose estimation and three-dimensional scene model reconstruction can be performed under the conditions of low illumination and low texture, the moving objects in the target scene can be effectively removed, and high model reconstruction efficiency is also achieved.

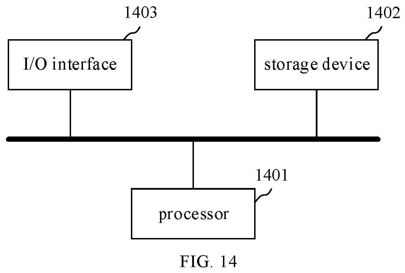

As shown in FIG. 14, an embodiment of the present disclosure further provides a multi-modal three-dimensional model establishment device, including: at least one processor 1401; a storage device 1402 having stored therein at least one program which, when executed by the at least one processor 1401, causes the at least one processor 1401 to implement the multi-modal three-dimensional model establishment method according to the embodiments of the present disclosure.

The multi-modal three-dimensional model establishment device according to the embodiment of the present disclosure may further include at least one input/output (I/O) interface 1403 connected between the processor 1401 and the storage device 1402 and configured to enable information interaction between the processor 1401 and the storage device 1402.

The processor 1401 is a device having a data processing capability, and includes, but is not limited to, a Central Processing Unit (CPU); the storage device 1402 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 1403 is connected between the processor 1401 and the storage device 1402, is capable of enabling the information interaction between the processor 1401 and the storage device 1402, and includes, but is not limited to, a data bus (Bus).

In some embodiments, the processor 1401, the storage device 1402, and the I/O interface 1403 are connected to each other through a bus, and then are connected to other components of a computing device.

An embodiment of the present disclosure further provides a computer readable medium having stored therein a computer program which, when executed, implements the multi-modal three-dimensional model establishment method according to the embodiments of the present disclosure.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/non-volatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

## Claims

1. A multi-modal three-dimensional model establishment method, comprising:
acquiring Inertial Measurement Unit, called IMU, measurement data, a first image group captured by a stereo event camera, and a second image captured by a monocular RGB camera;
calculating a second image group and a joint depth estimation image group based on the IMU measurement data, the second image, and the first image group, wherein a motion blur correction process and a frame interpolation process are performed on the second image based on a smoothed first image group to obtain the second image group, a motion compensation process is performed on the first image group based on the IMU measurement data to obtain the smoothed first image group, and a moving object removal process is performed on the second image and the first image group to obtain the joint depth estimation image group;
generating a three-dimensional model based on the second image group, the joint depth estimation image group, an initial pose, and a target image, wherein the initial pose is obtained by calculation based on the IMU measurement data.

2. The method of claim 1, further comprising:
performing a noise reduction process and a smoothing process on the IMU measurement data to obtain processed IMU measurement data;
performing the motion compensation process on the first image group based on the processed IMU measurement data to obtain the smoothed first image group.

3. The method of claim 2, wherein performing the motion compensation process on the first image group based on the processed IMU measurement data to obtain the smoothed first image group comprises:
calculating a rotation matrix and a location matrix of a target event based on the processed IMU measurement data, wherein the target event is an event corresponding to capture of the first image group;
for each pixel of a left eye image and a right eye image in the first image group, calculating motion-compensated coordinates of the pixel based on original coordinates of the pixel, the rotation matrix, the location matrix, and a preset motion compensation hyperparameter, wherein the motion-compensated coordinates of the pixel are used to generate the smoothed first image group.

4. The method of claim 2, wherein performing the motion blur correction process and the frame interpolation process on the second image based on the smoothed first image group to obtain the second image group comprises:
generating an optical flow image group based on the smoothed first image group, and performing triangularization depth calculation on the optical flow image group to obtain a first depth calculation image group;
performing the frame interpolation process on the second image using the optical flow image group to obtain a second image-interpolated image group;
performing depth estimation on the second image-interpolated image group to obtain a first depth estimation image group;
generating an expanded second image group based on the first depth calculation image group, the second image-interpolated image group, and the first depth estimation image group;
generating the second image group based on the expanded second image group.

5. The method of claim 4, wherein performing the frame interpolation process on the second image using the optical flow image group to obtain the second image-interpolated image group comprises:
generating a predicted image for the second image based on the optical flow image group and the second image;
performing a motion blur removal process on the second image based on the predicted image and a residual network to obtain a processed second image;
performing the frame interpolation process on the processed second image using the optical flow image group to obtain the second image-interpolated image group.

6. The method of claim 4, wherein generating the second image group based on the expanded second image group comprises:
determining a moving object mask in the expanded second image group based on the smoothed first image group and the processed IMU measurement data;
removing an image of a region corresponding to the moving object mask from the expanded second image group to obtain the expanded second image group subjected to removal;
filling the region corresponding to the moving object mask in the expanded second image group subjected to removal with a background image to obtain the second image group.

7. The method of claim 6, wherein determining the moving object mask in the expanded second image group based on the smoothed first image group and the processed IMU measurement data comprises:
performing a semantic segmentation process on the expanded second image group to obtain a movable object mask;
determining a candidate moving object mask in the smoothed first image group based on the processed IMU measurement data;
determining the moving object mask in the expanded second image group based on the movable object mask and the candidate moving object mask.

8. The method of claim 7, wherein determining the candidate moving object mask in the smoothed first image group based on the processed IMU measurement data comprises:
determining, based on the processed IMU measurement data, a velocity of a stationary object response event in the smoothed first image group and a velocity of a moving object response event in the smoothed first image group;
determining the candidate moving object mask in the smoothed first image group based on the velocity of the stationary object response event in the smoothed first image group and the velocity of the moving object response event in the smoothed first image group.

9. The method of claim 7, wherein determining the moving object mask in the expanded second image group based on the movable object mask and the candidate moving object mask comprises:
calculating an Intersection over Union, called IoU, between the movable object mask and the candidate moving object mask;
in a case where the IoU is greater than a preset threshold, determining the movable object mask as the moving object mask in the expanded second image group.

10. The method of claim 6, wherein calculating the joint depth estimation image group based on the IMU measurement data, the second image, and the first image group comprises:
after the moving object mask is determined, removing the image of the region corresponding to the moving object mask from the smoothed first image group to obtain the smoothed first image group subjected to removal;
performing triangularization depth calculation on the smoothed first image group subjected to removal to obtain a second depth calculation image group;
performing depth estimation on the expanded second image group subjected to removal to obtain a second depth estimation image group;
performing a fusion process on the second depth calculation image group and the second depth estimation image group to obtain the joint depth estimation image group.

11. The method of any one of claims 1 to 10, wherein generating the three-dimensional model based on the second image group, the joint depth estimation image group, the initial pose, and the target image comprises:
performing iterative computation in an adversarial generation manner based on the second image group, the joint depth estimation image group, the initial pose, and the target image to obtain an estimated pose meeting a convergence condition, wherein the estimated pose is a parameter of the three-dimensional model.

12. The method of claim 11, wherein performing iterative computation in the adversarial generation manner based on the second image group, the joint depth estimation image group, the initial pose, and the target image to obtain the estimated pose meeting the convergence condition comprises:
for one round of iterative computation, respectively calculating, based on the target image, a predicted second image group of the current round, a predicted joint depth estimation image group of the current round, and a predicted pose of the current round;
calculating a first adversarial residual of the current round based on the second image group of the current round and the predicted second image group of the current round, calculating a second adversarial residual of the current round based on the joint depth estimation image group of the current round and the predicted joint depth estimation image group of the current round, and calculating a third adversarial residual of the current round based on the estimated pose of the current round and the predicted pose of the current round, wherein the estimated pose of a first round is obtained by calculation based on the initial pose;
in a case where all the first adversarial residual, the second adversarial residual, and the third adversarial residual of the current round meet the convergence condition, determining the estimated pose of the current round as the parameter of the three-dimensional model.

13. The method of claim 12, wherein after calculating the third adversarial residual of the current round based on the estimated pose of the current round and the predicted pose of the current round, the method further comprises:
in a case where the third adversarial residual is less than a first preset threshold and a next round of iterative computation is to be performed, calculating an estimated pose of the next round of iterative computation based on the estimated pose of the current round;
in a case where the third adversarial residual is less than a second preset threshold, updating the IMU measurement data based on the estimated pose of the current round, wherein the second preset threshold is less than the first preset threshold.

14. A multi-modal three-dimensional establishment device, comprising:
one or more processors;
a storage device having one or more programs stored therein,
wherein the one or more programs, when executed by the one or more processors, cause the one or more processors to implement the multi-modal three-dimensional model establishment method of any one of claims 1 to 13.

15. A computer readable medium having a computer program stored therein, wherein the program when executed implements the multi-modal three-dimensional model establishment method of any one of claims 1 to 13.
